Europäisches Patentamt

European Patent Office

Office européen des brevets

(11) Veröffentlichungsnummer: **0 284 064 B1**

## EUROPÄISCHE PATENTSCHRIFT

(45) Veröffentlichungstag der Patentschrift: **04.01.95**

(21) Anmeldenummer: **88104736.9**

(22) Anmeldetag: **24.03.88**

Die Akte enthält technische Angaben, die nach
dem Eingang der Anmeldung eingereicht wurden
und die nicht in dieser Patentschrift enthalten sind.

(51) Int. Cl.$^6$: **C08G 59/68**

(54) **Photohärtbare Schleifmittel.**

(30) Priorität: **27.03.87 CH 1181/87**

(43) Veröffentlichungstag der Anmeldung:
**28.09.88 Patentblatt 88/39**

(45) Bekanntmachung des Hinweises auf die
Patenterteilung:
**04.01.95 Patentblatt 95/01**

(84) Benannte Vertragsstaaten:
**CH DE FR GB IT LI**

(56) Entgegenhaltungen:
**EP-A- 94 915**
**EP-A- 0 168 065**
**EP-A- 0 257 757**
**FR-A- 2 322 897**
**FR-A- 2 582 005**

**Chemistry & Technology of UV & EB FORMU-
LATION for Coating, INKS and PAINTS, VOL.
III, pages 433-439, SITA Technology LTD,
LONDON, 1991**

(73) Patentinhaber: **CIBA-GEIGY AG**
**Klybeckstrasse 141**
**CH-4002 Basel (CH)**

(72) Erfinder: **Rembold, Manfred, Dr.**
**Im Aeschfeld 21**
**CH-4147 Aesch (CH)**
Erfinder: **Ilg, Stephan**
**Moosmattstrasse 93**
**CH-4304 Giebenach (CH)**

(74) Vertreter: **Zumstein, Fritz, Dr. et al**
**Patentanwälte,**
**Dr. F. Zumstein,**
**Dipl.-Ing. F. Klingseisen,**
**Bräuhausstrasse 4**
**D-80331 München (DE)**

EP 0 284 064 B1

## Beschreibung

Die Erfindung betrifft ein Verfahren zur Herstellung von Schleifmitteln unter Verwendung von kationisch photohärtbaren Bindemitteln und speziellen Härtungskatalysatoren sowie die so hergestellten Schleifmittel. Sie betrifft insbesondere Schleifmittel auf zweidimensionalen biegsamen Trägern, wie Schleifpapiere und Schleifgewebe.

Sowohl in elastisch gebundenen Schleifmitteln, wie z.B. in Schleifpapieren oder Schleifgeweben, als auch in starr gebundenen Schleifmitteln (Schleifkörpern) verwendet man als Bindemittel für das Schleifkorn in zunehmendem Mass synthetische Harze, insbesondere Phenoplaste, Aminoplaste und Epoxidharze. Die Härtung geschieht durch längeres Erhitzen, das bis zu mehreren Stunden dauern kann. Bei der Produktion solcher Schleifmittel ist die Härtungszeit ein entscheidender Schritt für die Produktionsgeschwindigkeit und die Reduktion der Härtungszeit ist daher von hohem Interesse.

Eine von der Lacktechnologie neuerdings angewandte sehr schnelle Härtungsmethode für Bindemittelharze ist die Photohärtung, bei der entsprechend photosensitive Bindemittelsysteme durch Bestrahlung mit kurzwelligem Licht, vorzugsweise mit UV-Lampen, gehärtet werden. Bei diesem Härtungsvorgang handelt es sich um eine radikalische Polymerisation von olefinisch ungesättigten Monomeren bzw. Oligomeren, beispielsweise von Acrylaten oder ungesättigten Polyesterharzen.

Es wurde in der US-A-4,047,903 auch bereits vorgeschlagen, solche photosensitive ungesättigte Systeme als Bindemittel für Schleifmittel zu verwenden und ihre Härtung durch Elektronenbestrahlung durchzuführen. Die dabei erzielbaren Härtungszeiten sind tatsächlich sehr kurz, man ist jedoch auf ungesättigte Systeme als Bindemittel angewiesen, wie z.B. ungesättigte Polyesterharze, acrylierte Epoxide oder Acrylate von Polyolen. Diese Bindemittel genügen nicht allen applikatorischen Anforderungen wie z.B. hinsichtlich thermischer Beständigkeit oder Flexibilität. Es wurde daher neuerdings die kombinierte Verwendung von photohärtbaren ungesättigten Verbindungen und Phenolharzen vorgeschlagen (DE-A-3.603.398). Dies erlaubt eine rasche Zwischentrocknung durch Elektronenbestrahlung, erfordert aber anschliessend wieder eine zeitaufwendige thermische Endhärtung.

Es wurde auch bereits vorgeschlagen (GB-A-2.120.263), Katalysatoren für die Härtung von Phenoplasten und Aminoplasten durch UV-Bestrahlung im Harz zu erzeugen. Dadurch kann die Härtung beschleunigt werden ohne dass Blasenbildung eintritt. Die benötigten Härtungszeiten sind jedoch noch immer erheblich.

Es wurde nunmehr gefunden, dass man solche Schleifmittel, insbesondere Schleifpapiere und Schleifgewebe, auf Epoxidharzbasis in einem Zweistufenprozess in relativ kurzer Zeit härten kann, wenn man die Epoxidharze nicht in üblicher Weise durch Reaktion mit einem Härtungsmittel (wie z.B. Amin oder Anhydrid) härtet, sondern eine photochemische kationische Härtung des Epoxidharzes durchführt.

Es ist bekannt, dass man Epoxidharze ohne Zusatz von Härtungsmitteln kationisch polymerisieren und dadurch aushärten kann. Hierzu werden die üblichen kationischen Polymerisationskatalysatoren verwendet, wie z.B. Lewis-Säuren. Es ist weiter bekannt, dass man eine solche kationische Polymerisation photochemisch initiieren kann, wenn man als Katalysatoren Verbindungen verwendet, die bei Bestrahlung mit aktinischem Licht Lewis-Säuren oder andere kationisch aktive Polymerisationsinitiatoren bilden. Solche photoaktivierbare Katalysatoren sind beispielsweise Hexafluorphosphate, Tetrafluorborate oder Hexafluorarsenate von Triarylsulfoniumsalzen (z.B. US-A-4,058,401 oder FR-A-2 322 897), von Diaryliodoniumsalzen (z.B. US-A-4,394,403) oder von Aren-Eisen-Komplexsalzen (z.B. EP-A-94.915).

Die Anwendung der kationischen Photopolymerisation von Epoxidharzen als Bindemittel für Schleifmittel ist neu und hat gegenüber der Verwendung konventionell gehärteter Epoxidharze den Vorteil der längeren Topfzeit und der verkürzten Härtezeit. Gegenüber Phenoplasten oder Aminoplasten erfordern die Epoxidharze niedrigere Härtungstemperaturen und wesentlich kürzere Härtungszeiten.

Das Epoxidharz, das den Photoinitiator enthält, ist unter Ausschluss von Licht bei Raumtemperatur fast unbegrenzt lagerfähig, während Gemische von Epoxidharzen mit konventionellen Härtungsmitteln, wie z.B. Polyaminen, bereits bei Raumtemperatur eine langsame Härtung eingehen, so dass man solche Mischungen rasch verarbeiten muss.

Das mit dem Photoinitiator versetzte Epoxidharz wird auf das Trägermaterial aufgebracht und vor dem Aufbringen des Schleifkornes mit aktinischem Licht belichtet. Durch diese Belichtung wird der Katalysator aktiviert. Die Härtung geschieht durch anschliessendes oder gleichzeitiges Erwärmen. Vor oder nach dem Erwärmen kann eine zweite Beschichtung aufgebracht werden, die aus demselben oder aus einem anderen Bindemittel besteht.

Das erfindungsgemässe Verfahren zur Herstellung von Schleifmitteln besteht daher im Aufbringen einer Bindemittelschicht auf ein Trägermaterial, kurzzeitiger Bestrahlung der Schicht mittels aktinischem Licht, Aufbringen des Schleifkornes auf die noch plastische Schicht und anschliessender oder gleichzeitiger thermischer Härtung, wobei als Bindemittel ein Epoxidharz verwendet wird, das keine ethylenisch ungesättigten Gruppen enthält, das mindestens einen kationischen Photoinitiator enthält, und wobei gegebenenfalls im Anschluss an das Aufbringen des Schleifkornes oder im Anschluss an die thermische Härtung der ersten Schicht eine zweite Bindemittelschicht aufgebracht und gehärtet werden kann, deren Bindemittel gleich oder verschieden vom Bindemittel der ersten Schicht ist.

Das Verfahren ist dadurch gekennzeichnet, daß als Photoinitiator ein Aren-Eisen-Komplexsalz mit einem der Anionen $BF_4^-$, $PF_6^-$, $AsF_6^-$, $SbF_6^-$ $SbCl_6^-$ oder $BiCl_6^-$ verwendet wird und das Aufbringen des Schleifkorns nach dem Bestrahlen erfolgt.

Als Trägermaterial werden vorzugsweise Papiere oder Gewebe verwendet. Diese werden meist mit einer porenfüllenden Grundierung präpariert, die ebenfalls aus einem photohärtbaren Epoxid bestehen kann. Das Epoxidharz kann auf dieses Trägermaterial durch die üblichen Beschichtungsmethoden aufgebracht werden, beispielsweise durch Streichen, Walzen, Rakeln, Spritzen, Tauchen oder Giessen.

Es können alle üblichen Epoxidharze verwendet werden, wie aromatische, aliphatische oder cycloaliphatische Epoxidharze. Es sind dies Verbindungen mit mindestens zwei Epoxidgruppen im Molekül. Beispiele hierfür sind die Glycidylether und $\beta$-Methylglycidylether aliphatischer oder cycloaliphatischer Diole oder Polyole, z.B. solche des Ethylenglykols, Propan-1,2-diols, Propan-1,3-diols, Butan-1,4-diols, Diethylenglykols, Polyethylenglykols, Polypropylenglykols, Glycerins, Trimethylolpropans oder 1,4-Dimethylolcyclohexans oder des 2,2-Bis-(4-hydroxycyclohexyl)-propans und N,N-Bis-(2-hydroxyethyl)-anilins; die Glycidylether von Di-und Polyphenolen, beispielsweise von Resorcin, von 4,4'-Dihydroxydiphenyl-2,2-propan, von Novolaken oder von 1,1,2,2-Tetrakis-(4-hydroxyphenyl)-ethan. Weitere Beispiele sind N-Glycidylverbindungen, z.B. die Diglycidylverbindungen des Ethylenharnstoffs, 1,3-Propylenharnstoffs oder 5-Dimethylhydantoins oder des 4,4'-Methylen-5,5'-tetramethyldihydantoins, oder solche wie Triglycidylisocyanurat.

Weitere Glycidylverbindungen von technischer Bedeutung sind die Glycidylester von Carbonsäuren, insbesondere Di- und Polycarbonsäuren. Beispiele dafür sind die Glycidylester der Bernsteinsäure, Adipinsäure, Azelainsäure, Sebacinsäure, Phthalsäure, Terephthalsäure, Hexahydrophthalsäure, Isophthalsäure oder Trimellithsäure, oder von dimerisierten Fettsäuren.

Beispiele für Polyepoxide, die keine Glycidylverbindungen sind, sind die Diepoxide des Vinylcyclohexans und Dicyclopentadiens, 3-(3',4'-Epoxicyclohexyl)-8,9-epoxy-2,4-dioxaspiro[5.5]undecan, der 3'4'-Epoxicyclohexylmethylester der 3,4-Epoxicyclohexancarbonsäure, Butadiendiepoxid oder Isoprendiepoxid, epoxidierte Linolsäurederivate oder epoxidiertes Polybutadien.

Bevorzugte Epoxidharze sind gegebenenfalls vorverlängerte Diglycidylether zweiwertiger Phenole oder zweiwertiger aliphatischer Alkohole mit 2 bis 4 Kohlenstoffatomen. Besonders bevorzugt werden die gegebenenfalls vorverlängerten Diglycidylether des 2,2-Bis-(4-hydroxyphenyl)-propans und Bis-(4-hydroxyphenyl)-methans.

Dadurch, dass heute eine grosse Anzahl von verschiedenen Epoxidharzen im Handel erhältlich ist, kann man gemäss dem vorliegenden Verfahren die Eigenschaften des Bindemittels weitgehend variieren. Eine weitere Variationsmöglichkeit besteht in der Verwendung von Mischungen verschiedener Epoxidharze sowie im Zusatz von Flexibilisatoren und Reaktivverdünnern. Eine weitere Möglichkeit zur Modifizierung des Bindemittels ist die Verwendung eines Gemisches aus einem Epoxidharz und einem Phenol-Formaldehyd-Harz.

Die Epoxidharze können zur Erleichterung des Auftrages mit einem Lösungsmittel verdünnt werden, beispielsweise, wenn der Auftrag durch Spritzen geschieht. Vorzugsweise verwendet man jedoch das Epoxidharz in lösungsmittelfreiem Zustand. Bei Raumtemperatur zähflüssige bis feste Harze können im heissen Zustand aufgetragen werden.

Dem Harz können auch Füllstoffe oder andere Zusätze, wie z.B. Farbpigmente, zugesetzt werden. Beispiele für Füllstoffe sind Calciumcarbonat, Aluminiumoxid, Bariumsulfat, Graphit, Molybdänsulfid oder Eisensulfid.

Das Schleifkorn wird auf die noch plastische Beschichtung aufgebracht, vorzugsweise durch elektrostatisches Aufsprühen. Es können alle für Schleifmittel üblichen Materialien verwendet werden, wie z.B. Korund, Diamant, Siliciumcarbid (Carborundum), Borcarbid, Wolframcarbid, Schmirgel, Sand oder Glas.

Die Bestrahlung geschieht vor dem Auftrag des Schleifkornes. Hierzu wird das Schleifmaterial mit Licht bestrahlt, vorzugsweise im Wellenlängenbereich 200-600 nm, was auf einfache Weise in kontinuierlich arbeitenden Bestrahlungsanlagen geschehen kann, da die benötigten Bestrahlungszeiten nur in der Grössenordnung von etwa einer Sekunde liegen. Bei dieser Bestrahlung tritt noch keine wesentliche Härtung des Harzes ein, es wird nur der Katalysator aktiviert.

Die erfindungsgemäss verwendbaren Komplex-Salze sind Aren-Eisen-Komplexsalze, wie sie in der EP-A-94.915 beschrieben werden. Allen gemeinsam ist die Art der Anionen der Formel $BF_4^-$, $PF_6^-$, $AsF_6^-$, $SbF_6^-$, $SbCl_6^-$ oder $BiCl_6^-$.

3

Vorzugsweise verwendet man Aren-Eisen-Komplexsalze der Formel $[R^1\text{-Fe-}R^2]^+$ $[MX_m]^-$, worin $R^1$ ein ungeladener Arenligand, $R^2$ ein einwertiges Cyclopentadienyl- oder Methylcyclopentadienyl-Anion und $[MX_m]^-$ ein Anion der Formel $BF_4^-$, $PF_6^-$, $AsF_6^-$ oder $SbF_6^-$ ist.

$R^1$ als ungeladener Arenligand kann beispielsweise unsubstituiertes oder durch $C_1$-$C_{12}$-Alkyl substituiertes Benzol, Naphthalin, Phenanthren, Anthracen, Pyren oder Stilben sein.

Beispiele für solche Aren-Eisen-Komplexsalze sind folgende Verbindungen:

($\eta^6$-Benzol)($\eta^5$-cyclopentadienyl)-eisen(II)-hexafluorphosphat,

($\eta^6$-Toluol)($\eta^5$-methylcyclopentadienyl)-eisen(II)-hexafluorphosphat,

($\eta^6$-Cumol)($\eta^5$-cyclopentadienyl)-eisen(II)-hexafluorphosphat,

($\eta^6$-Cumol)($\eta^5$-cyclopentadienyl)-eisen(II)-tetrafluorborat,

($\eta^6$-Cumol)($\eta^5$-cyclopentadienyl)-eisen(II)-hexafluorantimonat,

($\eta^6$-Cumol)($\eta^5$-cyclopentadienyl)-eisen(II)-hexafluorarsenat,

($\eta^6$-Naphthalin)($\eta^5$-cyclopentadienyl)-eisen(II)-hexafluorphosphat,

($\eta^6$-2-Methylnaphthalin)($\eta^5$-cyclopentadienyl)-eisen(II)-hexafluorphosphat,

($\eta^6$-Pyren)($\eta^5$-cyclopentadienyl)-eisen(II)-hexafluorphosphat,

($\eta^6$-Stilben)($\eta^5$-cyclopentadienyl)-eisen(II)-hexafluorphosphat.

Die benötigte Menge Photoinitiator beträgt vorzugsweise etwa 0,1 bis 10 Gew.-%, insbesondere 1-5 Gew.-%, bezogen auf das Epoxidharz.

Die Wirkung dieser Aren-Eisen-Verbindungen kann noch gesteigert werden durch den Zusatz von Sensibilisatoren oder oxidativen Aktivatoren oder beiden Zusätzen. Sensibilisatoren erhöhen die Absorption, wodurch eine höhere Ausnutzung des Lichtes erreicht wird. Die photochemische Aktivierung des Katalysators verläuft dann noch schneller, oft in Bruchteilen einer Sekunde. Beispiele für Sensibilisatoren sind polycyclische Aromaten oder aromatische Heterocyclen, Acetophenon- und Benzophenon-Derivate, Benzile, Stilbene, Xanthone, Thioxanthone, Anthracene, Phthalimide.

Einzelne hierfür geeignete Verbindungen sind in der EP-A-152.377 auf Seite 8 und 9 aufgeführt. Bevorzugt verwendet man als Sensibilisatoren eine Thioxanthon-, Anthracen- oder Cumarinverbindung.

Oxidative Aktivatoren beschleunigen die kationische Polymerisation und damit den thermischen Härtungsprozess. Sie erlauben eine weitere Absenkung der Härtungstemperatur oder der Härtungszeit oder beider Verfahrensbedingungen. Hierfür verwendet man vorzugsweise ein organisches Peroxid oder Hydroperoxid, eine Percarbonsäure oder ein Chinon. Beispiele hierfür sind Di-tert.-butyl-peroxid, tert.-Butylhydroperoxid, Cumolhydroperoxid, Perbenzoesäure, m-Chlorperbenzoesäure oder Benzochinon.

Die thermische Härtung kann in Wärmekammern oder Trockenöfen erfolgen oder durch Bestrahlung mit Infrarot-Licht. Schleifmittel auf Trägermaterial (Papier, Textil, Plastik) können nur bei relativ niedrigen Temperaturen gehärtet werden, wodurch lange Härtungszeiten (1-2 Stunden) bedingt sind. Bei dem erfindungsgemässen Verfahren genügen jedoch auch bei niedrigen Härtungstemperaturen von etwa 50-150°C Härtungszeiten von 1-10 Minuten. Bei Infrarot-Härtung sind noch kürzere Härtungszeiten möglich. Dies ermöglicht eine wesentlich höhere Produktionsgeschwindigkeit als bei konventionellen Verfahren. Sofern es sich um lösungsmittelfreie Harze handelt, entfällt das Problem der Entfernung des Lösungsmittels aus der Abluft. Es werden bei der Härtung auch keine Kondensationsprodukte in Freiheit gesetzt.

Ueblicherweise wird nach Aufbringen des Schleifkornes eine zweite Bindemittelschicht aufgebracht. Dies kann auch beim erfindungsgemässen Verfahren geschehen. Das Bindemittel dieser Deckschicht kann ebenfalls ein kationisch gehärtetes Epoxidharz sein, es kann dann nass-in-nass (also vor der thermischen Härtung) aufgetragen werden und gemeinsam mit der unteren Schicht thermisch gehärtet werden. Mann kann die obere Schicht aber auch erst nach der thermischen Härtung der unteren Schicht auftragen und ist dann frei in der Wahl des Bindemittels für die obere Schicht. Die obere Schicht muss dann in einem zweiten thermischen Prozess gehärtet werden.

Die folgenden Beispiele zeigen die Ausführung des Verfahrens im Detail ohne das Verfahren auf diese Ausführungsart zu beschränken. Darin bedeuten Teile Gewichtsteile soweit nicht anders angegeben. Die Temperaturen sind in °C angegeben.

Beispiele

Folgende Harze werden verwendet:

H-1 Aromatisches Epoxidharz auf Basis Bisphenol A mit einem Epoxidäquivalent von 183-193 g/Aequ. (Araldit® GY 250, Ciba-Geigy AG);

H-2 Cycloaliphatisches Epoxidharz mit einem Epoxidäquivalent von 133-143 g/Aequ. (Araldit® CY 179);

H-3 Glycidylether eines Phenol-Novolakes mit einem Epoxidäquivalent von 172-179 g/Aequ. (Araldit® EPN 1139);

H-4    Phenol-Novolak-Glycidylether mit einem Epoxidäquivalent von 173-185 g/Aequ. (Araldit® XPY 307).

H-5    Phenol-Formaldehyd-Harz als 57%-ige Lösung in Butanol (Uravar® L9BT57, DSM Resins).

Als kationischer Photoinitiator wird verwendet:

PI-1    ($\eta^6$-Cumol)($\eta^5$-cyclopentadienyl)-eisen(II)-hexafluorphosphat.

Als oxidativer Aktivator wird verwendet:

A-1    Cumolhydroperoxid.

Die Initiatoren werden in den Harzen gelöst. Dann wird das Harz in einer Schichtdicke von 50 µm auf eine 200 µm starke Aluminiumfolie aufgetragen. Die Proben werden unter verschiedenen Transportgeschwindigkeiten unter einer Fusion D-Lampe vorbeigeführt. Anschliessend wird der noch flüssige Harzfilm mittels eines Vibrations-Siebes mit Korund in einer Menge von etwa 500 g/m$^2$ bestreut. Ein Teil jeder Probe wird nicht bestreut. An diesem Teil wird - nach der Härtung -die Pendelhärte gemessen.

Dann werden die Proben in einem Umluft-Ofen gehärtet unter Variation der Temperatur und der Zeit (siehe Tabelle 1). Die Durchhärtung des Harzes wird beurteilt durch Messung der Pendelhärte (gemäss DIN 53 157) unmittelbar nach der Härtung und nach 30 Minuten sowie nach 24 Stunden Lagerung der gehärteten Proben. Es ist für kationische Härtungen typisch, dass beim Lagern noch eine Nachhärtung eintritt.

EP 0 284 064 B1

Tabelle 1

| Harz (+ Füllstoff) | Initiator/ Aktivator | Transport- Geschwindigkeit bei Bestrahlung | Thermische Behandlung | Pendelhärte [s] sofort | nach 30 min | nach 24 h |
|---|---|---|---|---|---|---|
| H-1 | 2 % PI-1 | 10 m/min | 60 s − 100° | 75 | 84 | 170 |
| H-1 | 2 % PI-1 | 10 m/min | 45 s − 150° | 100 | 100 | 100 |
| H-1 | 4 % PI-1 | 10 m/min | 60 s − 100° | 145 | 160 | 210 |
| H-1 | 4 % PI-1 | 20 m/min | 60 s − 150° | 120 | 125 | 160 |
| H-1 | 2 % PI-1/2 % A-1 | 20 m/min | 90 s − 60° | 84 | 84 | 160 |
| H-1 | 4 % PI-1/2 % A-1 | 30 m/min | 60 s − 60° | 75 | 77 | 180 |
| H-1 | 4 % PI-1/2 % A-1 | 40 m/min | 90 s − 60° | 50 | 50 | 165 |
| H-2 | 2 % PI-1 | 20 m/min | 180 s − 50° | 44 | 64 | 148 |
| H-2 | 4 % PI-1 | 20 m/min | 120 s − 50° | 84 | 140 | 220 |
| H-2 | 4 % PI-1 | 20 m/min | 15 s − 100° | 160 | 182 | 200 |
| H-1/H-2 | | | | | | |
| 90:10 | 4 % PI-1 | 40 m/min | 30 s − 100° | 84 | 84 | 115 |
| 80:20 | 4 % PI-1 | 40 m/min | 30 s − 100° | 90 | 90 | 103 |
| 70:30 | 4 % PI-1 | 40 m/min | 30 s − 100° | 80 | 80 | 92 |
| H-3 | 2 % PI-1 | 10 m/min | 30 s − 150° | 140 | 155 | 180 |
| H-3 | 4 % PI-1 | 20 m/min | 30 s − 150° | 120 | 130 | 170 |

| Harz (+ Füllstoff) | Initiator/ Aktivator | Transport-Geschwindigkeit bei Bestrahlung | Thermische Behandlung | Pendelhärte [s] | | |
|---|---|---|---|---|---|---|
| | | | | sofort | nach 30 min | nach 24 h |
| H-4 | 2 % PI-1 | 10 m/min | 30 s - 150° | 100 | 100 | 114 |
| H-4 | 4 % PI-1 | 20 m/min | 30 s - 150° | 112 | 112 | 130 |
| H-2 + 50 % Kaolin | 4 % PI-1 | 20 m/min | 15 s - 100° | 120 | 130 | 185 |
| H-2 + 50 % Kaolin | 4 % PI-1 | 30 m/min | 15 s - 100° | 120 | 130 | 185 |
| H-2 + 50 % Kaolin | 4 % PI-1 | 30 m/min | 30 s - 100° | 92 | 98 | 145 |
| H-1/H-2 80:20 + 25 % Kaolin | 4 % PI-1 | 20 m/min | 30 s - 100° | 170 | 177 | 200 |
| H-1/H-2 80:20 + 25 % Kaolin | 4 % PI-1 | 30 m/min | 30 s - 100° | 110 | 115 | 150 |
| H-1/H-5 90:10 | 4 % PI-1 | 10 m/min | 60 s - 100° | 196 | 210 | 210 |
| H-1/H-5 70:30 | 4 % PI-1 | 10 m/min | 60 s - 100° | 196 | 200 | 220 |
| H-1/H-5 50:50 | 4 % PI-1 | 10 m/min | 60 s - 100° | 161 | 170 | 187 |
| H-2/H-5 90:10 | 4 % PI-1 | 20 m/min | 120 s - 50° | 38 | 58 | 182 |
| H-2/H-5 70:30 | 4 % PI-1 | 20 m/min | 120 s - 50° | 45 | 53 | 155 |
| H-2/H-5 50:50 | 4 % PI-1 | 20 m/min | 120 s - 50° | 28 | 35 | 158 |

## Patentansprüche

1. Verfahren zur Herstellung eines Schleifmittels durch Aufbringen einer Bindemittelschicht auf ein Trägermaterial, kurzzeitige Bestrahlung der Schicht mittels aktinischem Licht, Aufbringen des Schleifkornes auf die noch plastische Schicht und anschliessende oder gleichzeitige thermische Härtung, wobei als Bindemittel ein Epoxidharz oder ein Gemisch mehrerer Epoxidharze verwendet wird, das mindestens einen kationischen Photoinitiatorenthält, wobei das Epoxidharz, bzw. das Gemisch mehrerer Epoxidharze keine ethylenisch ungesättigten Gruppen enthält, dadurch gekennzeichnet, dass als

7

Photoinitiator ein Aren-Eisen-Komplexsalz mit einem der Anionen $BF_4^-$, $PF_6^-$, $AsF_6^-$, $SbF_6^-$, $SbCl_6^-$ oder $BiCl_6^-$ verwendet wird und das Aufbringen des Schleifkorns nach dem Bestrahlen erfolgt.

2. Verfahren gemäss Anspruch 1, wobei im Anschluss an das Aufbringen des Schleifkornes oder im Anschluss an die thermische Härtung der ersten Schicht eine zweite Bindemittelschicht aufgebracht und gehärtet wird, deren Bindemittel gleich oder verschieden vom Bindemittel der ersten Schicht ist.

3. Verfahren gemäss Anspruch 1 oder 2, dadurch gekennzeichnet, dass als Bindemittel ein Gemisch aus einem Epoxidharz und einem Phenol-Formaldehyd-Harz verwendet wird.

4. Verfahren gemäss Anspruch 1, dadurch gekennzeichnet, dass das Trägermaterial ein Papier oder Gewebe ist, das unbeschichtet oder mit einer Grundierschicht beschichtet ist.

5. Verfahren gemäss Anspruch 1, dadurch gekennzeichnet dass die Bestrahlung mit Licht des Wellenlängenbereiches 200-600 nm erfolgt.

6. Verfahren gemäss Anspruch 1, dadurch gekennzeichnet, dass die thermische Härtung bei 50-200°C erfolgt.

7. Verfahren gemäss Anspruch 6, dadurch gekennzeichnet, dass die thermische Härtung bei 70-150°C erfolgt.

8. Verfahren gemäss Anspruch 1, dadurch gekennzeichnet, dass als Photoinitiator eine Verbindung der Formel $[R^1\text{-}Fe\text{-}R^2]^+$ $[MX_m]^-$ verwendet wird, worin $R^1$ ein ungeladener Arenligand ist, $R^2$ ein einwertiges Cyclopentadienyl- oder Methylcyclopentadienyl-Anion ist und $[MX_m]^-$ ein Anion der Formel $BF_4^-$, $PF_6^-$, $AsF_6^-$ oder $SbF_6^-$ ist.

9. Verfahren gemäss Anspruch 1, dadurch gekennzeichnet, dass zusätzlich zum Photoinitiator ein Sensibilisator oder ein oxidativer Aktivator verwendet wird.

10. Verfahren gemäss Anspruch 9, dadurch gekennzeichnet, dass als Sensibilisator eine Thioxanthon-, Anthracen- oder Cumarinverbindung verwendet wird.

**Claims**

1. A process for the preparation of an abrasive by applying a layer of binder to a support, briefly irradiating said layer with actinic light, applying the abrasive particles to the still plastic layer and carrying out subsequent or simultaneous heat curing, said binder being an epoxy resin or a mixture of two or more epoxy resins that contains at least one cationic photoinitiator, the epoxy resin or the mixture of two or more epoxy resins not containing any ethylenically unsaturated groups, which comprises using as photoinitiator an arene/iron complex salt containing an anion selected from the group consisting of $BF_4^-$, $PF_6^-$, $AsF_6^-$, $SbF_6^-$, $SbCl_6^-$ or $BiCl_6^-$ and applying the abrasive particles after irradiation.

2. A process according to claim 1, which comprises applying and curing a second layer of binder subsequent to the application of the abrasive particles or to the heat curing of the first layer, the binder of said second layer being the same as, or different from, the binder of the first layer.

3. A process according to either claim 1 or claim 2, wherein a mixture of an epoxy resin and a phenol-formaldehyde resin is used as binder.

4. A process according to claim 1, wherein the support is a paper or fabric which is uncoated or coated with a primer.

5. A process according to claim 1, wherein irradiation is effected with light in the wavelength range 200-600 nm.

6. A process according to claim 1, wherein heat curing is effected at 50-200°C.

7. A process according to claim 6, wherein heat curing is effected at 70-150°C.

8. A process according to claim 1, wherein the photoinitiator used is a compound of formula $[R^1\text{-Fe-}R^2]^+$-$[MX_m]^-$, in which $R^1$ is an uncharged arene ligand, $R^2$ is a monovalent cyclopentadienyl or methyl-cyclopentadienyl anion and $[MX_m]^-$ is an anion of formula $BF_4^-$, $PF_6^-$, $AsF_6^-$ or $SbF_6^-$.

9. A process according to claim 1, which comprises using a sensitiser or an oxidative activator in addition to the photoinitiator.

10. A process according to claim 9, wherein the sensitiser used is a thioxanthone, anthracene or coumarin compound.

## Revendications

1. Procédé pour la préparation d'un agent abrasif par dépôt d'une couche de liant sur un matériau support, par irradiation de courte durée de la couche par la lumière actinique, par dépôt de la poudre abrasive sur la couche encore plastique et par thermodurcissement ultérieur ou simultané, en utilisant en tant que liant une résine époxyde ou un mélange de plusieurs résines époxydes, qui contient au moins un photoamorceur cationique, la résine époxyde, respectivement le mélange de plusieurs résines époxydes, ne contenant pas de groupes à insaturation éthylénique, caractérisé en ce qu'on utilise en tant que photoamorceur un sel complexe de type arène-fer avec l'un des anions $BF_4^-$, $PF_6^-$, $AsF_6^-$, $SbF_6^-$, $SbCl_6^-$ ou $BiCl_6^-$ et on effectue le dépôt de la poudre abrasive après irradiation.

2. Procédé selon la revendication 1, selon lequel suite au dépôt de la poudre abrasive ou suite au durcissement thermique de la première couche, on dépose une deuxième couche et on la durcit, le liant de ladite deuxième couche étant identique ou différent du liant de la première couche.

3. Procédé selon la revendication 1 ou 2, caractérisé en ce qu'on utilise en tant que liant un mélange d'une résine époxyde et d'une résine phénolformaldéhyde.

4. Procédé selon la revendication 1, caractérisé en ce que le matériau support est un papier ou un tissu, qui n'est pas revêtu ou est revêtu d'une couche d'enduit.

5. Procédé selon la revendication 1, caractérisé en ce qu'on irradie avec une lumière dans un domaine de longueur d'ondes de 200-600 nm.

6. Procédé selon la revendication 1, caractérisé en ce qu'on effectue le durcissement thermique à des températures de 50 à 200°C.

7. Procédé selon la revendication 6, caractérisé en ce qu'on effectue le durcissement thermique à des températures de 70 à 150°C.

8. Procédé selon la revendication 1, caractérisé en ce qu'on utilise en tant que photoamorceur un composé de formule $[R^1\text{-Fe-}R^2]^+$ $[MX_m]^-$ dans laquelle $R^1$ représente un ligand arène non chargé $R^2$ représente un anion cyclopentadiényle ou méthylcyclopentadiényle monovalent et $[MX_m]^-$ est un anion de formule $BF_4^-$, $PF_6^-$, $AsF_6^-$ ou $SbF6^-$.

9. Procédé selon la revendication 1, caractérisé en ce qu'on utilise de plus, outre le photoamorceur, un photosensibilisateur ou un activateur oxydant.

10. Procédé selon la revendication 9, caractérisé en ce qu'on utilise en tant que sensibilisateur un dérivé de thioxanthone, d'anthracène ou de cumarine.